# EUROPÄISCHE PATENTANMELDUNG

(11) **EP 2 455 779 A1**
(43) Veröffentlichungstag der Anmeldung: **23.05.2012**
(21) Anmeldenummer: 11184296.9
(22) Anmeldetag: 07.10.2011
(51) Int. Cl.: G01S 15/93

(54) **Ultraschallbasierte Richtungsbestimmung von Objekten in einer Fahrzeugumgebung**

(30) Priorität: 17.11.2010 DE 102010044031
(71) Anmelder: Robert Bosch GmbH, 70442 Stuttgart (DE)
(72) Erfinder: Boeck, Heiko, 71229 Leonberg (DE); Hogenmueller, Thomas, Sunnyvale CA, 94087 (US); Irion, Albrecht, 70563 Stuttgart (DE); Schumann, Michael, 70597 Stuttgart (DE)

(57) **Zusammenfassung**

Die Erfindung betrifft ultraschallbasierte Messverfahren in einem Parkhilfesystem (201) eines Fahrzeugs (200) zur Richtungsbestimmung eines Objekts (212) in einer Fahrzeugumgebung. Ein derartiges Verfahren kann die folgenden Schritte umfassen: Aussenden eines Messsignals; Empfangen mehrerer Reflektionen des Messsignals durch eine Mehrzahl von Ultraschallsensoren (202 - 205); und Bestimmen der Richtung zum Objekt (212) durch eine Triangulationsberechnung basierend auf den empfangenen Reflektionen. Jeder der Ultraschallsensoren (202 - 205) arbeitet basierend auf einem individuellen Taktgeber. Die Messung wird gemäß einem für die Mehrzahl der Ultraschallsensoren (202 - 205) gemeinsamen, vorgegebenen Zeitschema durchgeführt.

## Beschreibung

### Stand der Technik

Die Erfindung betrifft ultraschallbasierte Messverfahren in einem Parkhilfesystem eines Fahrzeugs zur Abstands- und Richtungsbestimmung eines Objekts in einer Fahrzeugumgebung, sowie einen entsprechenden Parkassistenten.

Ein Parkassistent bzw. (Ein-)Parkhilfesystem kann über eine Mehrzahl von Sensoren verfügen; beispielsweise können vier oder sechs Sensoren in einem Front- und/oder einem Heckbereich eines Fahrzeugs angeordnet sein. Von den Sensoren werden Ultraschallsignale in eine vordere bzw. rückwärtige Umgebung des Fahrzeugs ausgesendet. Ein Objekt in der Umgebung reflektiert das Signal. Diese Echos werden von Empfängern aufgenommen, die separat oder mit den Ultraschallsendern in einer Sensoreinheit vorliegen. Die elektrisch gewandelten Echos werden an ein zentrales Steuergerät übermittelt, welches aus den Signalen Abstände zum Objekt berechnet. Befindet sich das Objekt beispielsweise beim Einparken im Fahrschlauch, so kann der Abstand zu diesem potentiellen Hindernis dem Fahrer bspw. akustisch und/oder optisch ausgegeben werden. Zur Vernetzung der Sensoren und der Ausgabekomponenten mit dem Steuergerät ist eine entsprechende Verkabelung erforderlich. Meist sind die Sensoren über Zwei- oder Dreidrahtleitungen für Stromversorgung und Datenkommunikation angebunden.

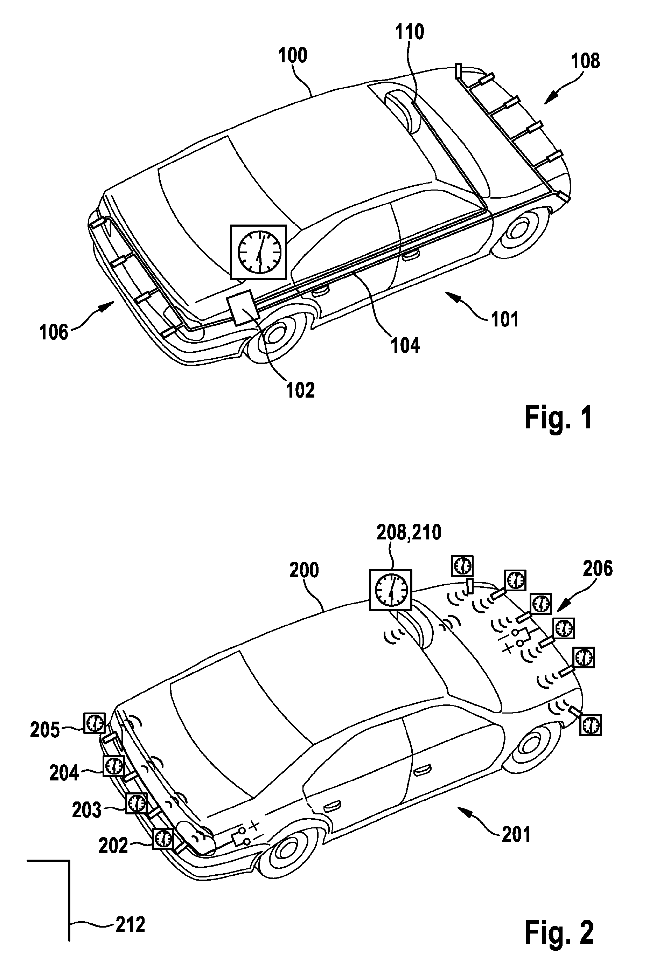

Figur 1 ist eine schematische Darstellung eines Fahrzeugs 100 mit einem bekannten drahtgebundenem Parkhilfesystem 101. Ein zentrales Steuergerät 102 ist als Einparkassistent ausgebildet. Das Steuergerät 102 kann beispielsweise Teil einer ECU ("Electronic Control Unit") sein. Das Steuergerät 102 ist über Drahtleitungen 104 mit vier Ultraschallsensoren 106 im Heckbereich des Fahrzeugs sowie sechs Ultraschallsensoren 108 im Frontbereich sowie vorderen Seitenbereich des Fahrzeugs verbunden. Die Drahtleitungen 104 können die Komponenten direkt miteinander verbinden, oder sie können Teil einer Verkabelung sein, mittels derer ein Bussystem implementiert ist, bspw. ein CAN("Controller Area Network")-Bus. Über die Drahtleitungen 104 ist weiterhin mindestens eine Ausgabeschnittstelle, bspw. ein HMI ("Human-Machine-Interface") 110 zur Ausgabe von Informationen an den Fahrer angebunden.

Die Sensoren 106, 108 sind einfache elektro-akustische Signalwandler, welche vom Steuergerät 102 über die Drahtleitungen 104 übermittelten Steuersignale in akustische Signale umwandeln, die in die Fahrzeugumgebung ausgesendet werden. Nach einer vorgegebenen Ausschwingzeit dienen dieselben Sensoren als umgekehrte Signalwandler, die ein aus der Umgebung reflektiertes Ultraschallsignal empfangen und es in elektrische Signale umwandeln. Die elektrischen Signale werden über die Drahtleitungen 104 an das Steuergerät 102 zur zentralen Auswertung übermittelt.

Zur Bestimmung des Abstandes zu einem Objekt in der Fahrzeugumgebung bestimmt das Steuergerät 102 die zwischen dem Aussenden und dem Empfangen eines Ultraschallsignals verstrichene Zeit und berechnet aus dieser Laufzeit den Abstand des Objekts vom Sensor. Für die Laufzeitbestimmung benötigt das Steuergerät 102 eine Zeitreferenz bzw. einen Taktgeber (z.B. auf Basis eines Schwingquarzes) und eine hierauf basierende Zähleinrichtung, bspw. einen Timer.

Um auch die Richtung zu einem potentiellen Hindernis bestimmen zu können, werden soggenannte Kreuzechos ausgewertet. Hierbei wird ein bestimmter Sensor durch das Steuergerät zum Aussenden eines Ultraschallsignals angeregt. Dieser Sensor sowie weitere Sensoren werden danach zur Detektion des reflektierten Ultraschallsignals verwendet. Über die unterschiedlichen Laufzeiten, die das Echo zu den unterschiedlichen Sensoreinbauorten benötigt, wird die jeweils unterschiedlich Distanz zum Objekt ermittelt. Über trigonometrische Berechnungen kann das zentrale Steuergerät dann die räumliche Lage zum Hindernis ermitteln. Grundlage für diese Art der Richtungsbestimmung ist auch hier die gemeinsame Zeitbasis im Steuergerät.

Nachteilig an Systemen wie dem in Figur 1 gezeigten ist der hohe Verkabelungsaufwand zur Anbindung der Vielzahl von Sensoren an das zentrale Steuergerät, welches wiederum eine oder mehrere Ausgabekomponenten ansteuern muss.

Der Artikel "Waeco hat die Funk Einparkhilfe MagicWatch MW2500 vorgestellt" im Fermodes Lifestyle Magazin vom 05. November 2009, abrufbar unter http://www.fermodes.de/autonews/artikel/waeco-hat-die-funk-einparkhilfe-magicwatch-mw2500-vorgestellt.html beschreibt ein System mit mehreren Ultraschallsensoren, die drahtlos an einen Empfänger im Innenraum des Fahrzeugs angebunden sind. Das System bietet Rangiersicherheit für verschiedene Typen von Fahrzeugen und warnt den Fahrer über akustische Signale, scheint also eine Abstandsbestimmung vorzunehmen. Eine Richtungsbestimmung scheint das System aber nicht vorzunehmen.

Der Artikel "ZigBee: Wireless Technology for Low-Power Sensor Networks" von Gary Legg, erschienen in TechOnline am 06. Mai 2004, abrufbar unter http://www.commsdesign.com/showArticle.jhtml?articlelD=192200323 beschreibt den ZigBee-Standard für Drahtlosnetzwerke. Im zweitletzten Absatz des Artikels wird mitgeteilt, der Standard könnte auch für Anwendungen im Automotive-Bereich in Frage kommen, wie etwa Reifendrucküberwachung und schlüssellosen Zugang. Die Verwendung von ZigBee für Einparkassistenten ist nicht erwähnt.

### Offenbarung der Erfindung

Erfindungsgemäß wird ein ultraschallbasiertes Messverfahren in einem Parkhilfesystem eines Fahrzeugs zur Richtungsbestimmung eines Objekts in einer Fahrzeugumgebung vorgeschlagen, welches die folgenden Schritte aufweist: Aussenden eines Messsignals, Empfangen mehrerer Reflektionen des Messsignals durch eine Mehrzahl von Ultraschallsensoren; und Bestimmen der Richtung zum Objekt durch eine Triangulationsberechnung basierend auf den empfangenen Reflektionen. Hierbei arbeitet jeder der Ultraschallsensoren basierend auf einem individuellen Taktgeber. Die Messung wird gemäß einem für die Mehrzahl der Ultraschallsensoren gemeinsamen, vorgegebenen Zeitschema durchgeführt. Das Messsignal kann dabei durch einen an der Messung beteiligten Ultraschallsensor, einen nicht mehr für den Empfang der Reflektionen verwendeten Ultraschallsensor oder einen separaten Ultraschallsender ausgesendet werden.

Insbesondere kann die Kommunikation zwischen einer die Triangulationsberechnung vornehmenden Steuerkomponente und den Ultraschallsensoren gemäß dem vorgegebenen Zeitschema ablaufen. Das gemeinsame Zeitschema kann etwa einen gemeinsamen Zeitrahmen für die Messung der Reflektionen vorgeben. Der Zeitrahmen für die Messung der Reflektionen kann so lang bemessen sein, dass jeder der an der Messung beteiligten Sensoren Reflektionen empfangen kann. Durch die Bemessung der Länge dieses Zeitrahmens wird somit die Reichweite des Systems festgelegt.

Das Zeitschema kann einen eigenen Zeitrahmen für jeden an der Messung beteiligten Sensor zur Übermittlung seines Messergebnisses betreffend eine empfangene Reflexion an die Steuerkomponente vorsehen. Zusätzlich oder alternativ kann das Zeitschema auch einen bestimmten Zeitrahmen zur Aussendung des Messsignals vorgeben.

Eine Zeitlage des Zeitschemas kann etwa durch eine Vorgabe der Steuerkomponente festgelegt werden. So kann eine Abfolge der unterschiedlichen Zeitrahmen fest vorgegeben sein und ein Beginn eines anfänglichen Zeitrahmens kann durch ein Signal der Steuerkomponente an alle beteiligten Sensoren vorgegeben werden. Zusätzlich oder alternativ kann eine Zeitlage des Zeitschemas auch durch ein Synchronisationsverfahren zur Synchronisation der individuellen Taktgeber der Mehrzahl an Sensoren untereinander festgelegt werden. So kann ein anfänglicher Zeitrahmen des Zeitschemas zu einem bestimmten Zeitpunkt nach einer erfolgreich abgeschlossenen Synchronisation beginnen. Bei einer bestimmten Ausführungsform berücksichtigt das Zeitschema sowohl das Aussenden des Messimpulses, die Messung von Reflexionen durch mehrere der Sensoren, und die Übermittlung der Messergebnisse an die Steuerkomponente.

Eine Kommunikation zwischen der Steuerkomponente und den Sensoren kann insbesondere Steuerbefehle der Steuerkomponente an die Sensoren beinhalten, die entweder die Zeitlage des Zeitschemas betreffen, und/oder weitere Aspekte des Zeitschemas, beispielsweise den Beginn der Zeitrahmen für das Aussenden des Messsignals, die Messung, und / oder die Übermittlung der Messergebnisse. Ein Zeitrahmen oder mehrere Zeitrahmen können beispielsweise auch eine (Neu-)Synchronisierung der Sensoren untereinander und/oder mit der Steuerkomponente beinhalten.

Das Zeitschema mit seiner Abfolge von vorgegebenen Zeitrahmen kann entweder fest vorgegeben sein und/oder kann, etwa von der Steuerkomponente, an die Sensoren übermittelt werden. Beispielsweise können ein Sensor oder mehrere Sensoren zu Beginn eines Zeitrahmens ein Steuersignal erhalten. Es kann ein bestimmter Zeitrahmen für derartige Steuersignale vorgesehen sein.

Ein oder mehrere Zeitrahmen des Zeitschemas können entweder eine fest vorgegebene Zeitlänge haben oder ein oder mehrere Zeitrahmen können etwa durch die Steuerkomponente individuell in ihrer Länge festgesetzt werden. So kann etwa ein Zeitraum für die Messung festgesetzt werden, bspw. in Abhängigkeit von einer Fahrzeuggeschwindigkeit, genauso wie auch ein Zeitrahmen für das Aussenden des Impulses oder das Senden des Messergebnisses an die Steuerkomponente individuell, gegebenenfalls auch für jeden Sensor individuell, festgesetzt werden kann.

Vorgeschlagen wird erfindungsgemäß weiterhin ein Computerprogramm zur Durchführung eines der hierin beschriebenen Verfahren, wenn das Computerprogramm auf einer programmierbaren Computereinrichtung ausgeführt wird. Bei der Computereinrichtung kann es sich beispielsweise um einen Parkassistenten bzw. ein Parkhilfesystem eines Fahrzeugs handeln, der bzw. das etwa auf einer ECU implementiert ist. Das Computerprogramm kann auf einem maschinenlesbaren Datenträger gespeichert sein, beispielsweise einem permanenten oder wiederbeschreibbaren Medium in oder in Zuordnung zu einer programmierbaren Computereinrichtung oder einer CD-ROM, DVD oder einem USB-Stick. Zusätzlich oder alternativ kann das Computerprogramm zum Herunterladen auf eine programmierbare Computereinrichtung bereitgestellt werden, z. B. über ein Datennetzwerk wie das Internet oder eine Kommunikationsverbindung wie etwa eine Telefonleitung oder eine drahtlose Verbindung.

Erfindungsgemäß wird weiterhin ein Parkhilfesystem in einem Fahrzeug zur Durchführung eines ultraschallbasierten Messverfahrens zur Richtungsbestimmung eines Objekts in einer Fahrzeugumgebung vorgeschlagen. Das Parkhilfesystem umfasst die folgenden Komponenten: eine Komponente zum Aussenden eines Messsignals; eine Mehrzahl von Ultraschallsensoren zum Empfangen mehrerer Reflektionen des Messsignals; und eine Steuerkomponente zum Bestimmen der Richtung zum Objekt durch eine Triangulationsberechnung basierend auf den empfangenen Reflektionen. Jeder der Ultraschallsensoren ist ausgebildet, um basierend auf einem individuellen Taktgeber zu arbeiten. Das Parkhilfesystem ist ausgebildet, die Messung gemäß einem für die Mehrzahl der Ultraschallsensoren gemeinsamen, vorgegebenen Zeitschema durchzuführen.

Die Ultraschallsensoren können drahtlos an die Steuerkomponente angebunden sein. Die Steuerkomponente kann ganz oder teilweise in eine Mensch-Maschine-Schnittstelle bzw. ein HMI integriert sein. Zusätzlich oder alternativ können (Teile der) Steuerkomponente in eine zentrale Steuereinheit eines Parkhilfesystems, eine ECU und/oder in einen der Ultraschallsensoren integriert sein.

Es wird weiterhin ein Verfahren zur Initialisierung eines Parkhilfesystems in einem Fahrzeug mit einer Mehrzahl an Sensoren zur Objektdetektion in einer Fahrzeugumgebung vorgeschlagen. Dieses Verfahren umfasst die folgenden Schritte: Detektieren, durch einen der Sensoren, dass ein Hindernis in einem Strahlengang des Sensors entfernt wird; Aussenden, basierend auf der Detektion, einer Anforderung durch den Sensor an eine Steuerungseinheit des Parkhilfesystems; und Aussenden, in Reaktion auf die Anforderung, einer für den Sensor bestimmten Adressvergabe von der Steuerungseinheit. Die Steuerungseinheit ist ausgebildet, eine Adressvergabe für jeden der Sensoren in einer vordefinierten Reihenfolge entsprechend einer vorgegebenen Reihenfolge bei der Entfernung von Hindernissen vor den Sensoren auszusenden.

Erfindungsgemäß wird schließlich ein Parkhilfesystem in einem Fahrzeug mit einer Mehrzahl von Sensoren zur Objektdetektion in einer Fahrzeugumgebung und mit einer Steuerungseinheit vorgeschlagen. Jeder der Sensoren ist dazu ausgebildet, das Entfernen eines Hindernisses in einem Strahlengang des Sensors zu detektieren. Jeder der Sensoren ist weiterhin ausgebildet zum Aussenden, basierend auf der Detektion, einer Anforderung an eine Steuerungseinheit des Parkhilfesystems. Die Steuerungseinheit ist schließlich ausgebildet zum Aussenden, in Reaktion auf die Anforderung, einer für den Sensor bestimmten Adressvergabe. Hierbei ist die Steuerungseinheit ausgebildet, eine Adressvergabe für jeden der Sensoren in einer vordefinierten Reihenfolge entsprechend einer vorgegebenen Reihenfolge bei der Entfernung von Hindernissen vor den Sensoren auszusenden.

### Vorteile der Erfindung

Die Erfindung stellt eine kostengünstig umzusetzende Technik zur Bestimmung der Richtung zu Objekten in einer Fahrzeugumgebung bereit. Die Aussendung eines Messimpulses sowie die anschließenden Reflektionsmessungen benötigen keinen zentralen Taktgeber, sondern werden mit Sensoren durchgeführt, von denen jeder seinen eigenen Taktgeber bzw. Taktgenerator hat. Diese Taktgeber brauchen jedoch nicht übermäßig präzise zu sein. Statt einer zentralen Uhr wird ein gemeinsames Zeitschema vorgegeben. Die zentrale Steuerkomponente übernimmt lediglich noch die Berechnung der genauen Abstands- bzw. Richtungswerte.

Das erfindungsgemäße Verfahren ermöglicht somit auch den Einsatz von drahtlosen Kommunikationssystemen im Fahrzeug, bei denen eine derart enge Anbindung und Steuerung von Sensoren an ein zentrales Steuergerät wie bei einem drahtgebundenem System nicht möglich ist. Erfindungsgemäß können somit die Sensoren mit der Steuerkomponente drahtlos verbunden werden, d.h. es kann auf aufwändige Verkabelungen verzichtet werden. Die Ultraschallsensoren benötigen lediglich noch eine Anbindung an eine Stromversorgung.

Das erfindungsgemäße System wird auch dadurch kosteneffizient, dass die Steuerkomponente beispielsweise in einem HMI, einer bestehenden zentralen Einheit wie einer ECU oder sogar in einem der Ultraschallsensoren integriert vorliegt. Wo genau die Steuerkomponente implementiert ist, hängt weder von einer (zumindest teilweise entfallenden) Verkabelung noch dem Vorhandensein eines präzisen Taktgebers auf der Hardwareplattform ab, auf dem die Steuerkomponente implementiert ist, da ein solcher nicht zwingend erforderlich ist.

Erfindungsgemäß kann ein Parkhilfesystem mit einer Mehrzahl bspw. drahtlos angebundener Sensoren in Bezug auf eine Adressvergabe vorteilhaft bereits bei einer Fahrzeugherstellung initialisiert werden. Die Sensoren können Gleichteile sein, brauchen also nicht durch eine Adressvergabe bei der Herstellung der Sensoren individualisiert werden. Dies verringert die Kosten für den Aufbau des Systems.

### Kurze Beschreibung der Figuren

Weitere Aspekte und Vorteile der Erfindung werden nunmehr anhand der beigefügten Figuren eingehender beschrieben. Hierbei zeigt:
- Figur 1: ein bekanntes, drahtgestütztes Parkhilfesystem für ein Fahrzeug;
- Figur 2: ein erstes Ausführungsbeispiel eines erfindungsgemäßen Parkhilfesystems;
- Figur 3: eine Prinzipskizze zu den Hecksensoren und der Steuerkomponente des Parkhilfesystems der Figur 2;
- Figur 4: ein Flussdiagramm zu einer Arbeitsweise des Parkhilfesystems der Figuren 2 und 3;
- Figur 5: eine schematische Darstellung eines Zeitschemas für die Durchführung einer Richtungsmessung im Parkhilfesystem der Figuren 2 bis 4;
- Figur 6: ein zweites Ausführungsbeispiel eines erfindungsgemäßen Parkhilfesystems; und
- Figur 7: ein Flussdiagramm zum Ablauf einer Initialisierung des ersten Ausführungsbeispiels.

### Ausführungsformen der Erfindung

In Figur 2 ist anhand eines schematisch dargestellten Fahrzeugs 200 ein erstes Ausführungsbeispiel 201 eines erfindungsgemäß ausgebildeten Parkassistenten bzw. Parkhilfesystems gezeigt. Der Parkassistent 201 verfügt über eine Mehrzahl von Ultraschallsensoren 202 - 205, die in einem Heckbereich des Fahrzeugs angeordnet sind, sowie eine Mehrzahl an Sensoren 206, die in einem Frontbereich des Fahrzeugs 200 angeordnet sind. Ferner verfügt der Parkassistent 201 über ein HMI 208, in dem eine Steuerkomponente 210 in Form einer Applikationssoftware integriert ist. Ein zentrales Steuergerät vergleichbar der ECU 102 in Figur 1 kann für die Implementierung weiterer Fahrerassistenzfunktionen im Fahrzeug 200 vorhanden sein, ist aber für das Parkhilfesystem 201 nicht erforderlich und daher in der Fig. 2 nicht gezeigt.

Die Ultraschallsensoren 202 - 206 sind drahtlos an die Steuerkomponente 210 angebunden. Wie unten weitergehend diskutiert werden wird, handelt es sich bei den Sensoren 202 - 206 um im Vergleich zu herkömmlichen Sensoren intelligente Einheiten ("Smart Sensors"), die für die drahtlose Kommunikation über einen eigenen Prozessor und einen eigenen Taktgeber ("Clock") verfügen. Aufgrund des eigenen Prozessors mit den entsprechenden Verarbeitungskapazitäten und des eigenen Taktgebers und der darauf basierenden Zeitbasis können diese Sensoren auch selbständig etwa eine Distanzmessung vornehmen. Somit umfasst das in Figur 2 dargestellte Parkhilfesystem 201 einer Mehrzahl an Subsystemen 202 - 205, 206, die über die Steuerkomponente 210 koordiniert werden. Die Steuerkomponente 201 steuert bspw. eine Koordination der Messprogramme und eine Ausgabe von resultierenden Informationen über das HMI 208.

Mithilfe der Mehrzahl (intelligenter) Sensoren 202 - 205 bzw. 206 kann jeweils eine Richtungsmessung zu mindestens einem Objekt in einem rückwärtigen Umgebungsbereich des Fahrzeugs 200 bzw. zu mindestens einem Objekt im Frontbereich realisiert werden, wobei eine derartige Messung auf einem gemeinsamen Zeitschema basiert, an das sich alle beteiligten Sensoren halten, und zwar sowohl für die Durchführung der Messung als auch die Kommunikation der Subsysteme mit der Steuerkomponente 210 und/oder untereinander.

Eine die Zeitbasis betreffende Synchronisation der Sensoren 202 - 205 bzw. 206 untereinander als auch mit der Steuerkomponente 210 sowie die Konfiguration eines Sensors zur Befolgung eines gemeinsamen Zeitschemas kann auf Zeitskalen stattfinden, wie sie für elektromagnetische Vorgänge typisch sind; diese Zeitskalen sind üblicherweise sehr viel kürzer als die Messvorgänge zur Distanz-/Richtungsdetektion, deren Zeitskalen auf der Laufzeit der Ultraschallsignale beruhen.

Als Beispiel wird eine Richtungsmessung zu einem angedeuteten Objekt 212 in der rückwärtigen Umgebung des Fahrzeugs 200 herangezogen. Einige oder alle der Sensoren 202 - 205 führen eine Messung der Distanz zum Objekt 212 durch. Jede dieser Messungen basiert jeweils auf der eigenen, lokalen Zeitbasis des entsprechenden Sensors; eine Synchronisation oder ein sensor-übergreifendes, d.h. gemeinsames Zeitschema ist hierfür nicht zwingend erforderlich. Für die Kommunikation mit der Steuerkomponente 210, aber auch zur Messung von Kreuzechos für die Richtungsbestimmung müssen allerdings die Zeitbasen aller einbezogenen Sensoren synchronisiert werden. Nach der Synchronisation kann dann ein Messverfahren zur Bestimmung der Richtung zum Objekt 212 durchgeführt werden. Hierbei sendet einer der Sensoren zu einem bestimmten, durch ein gemeinsames Zeitschema vorgegebenen Zeitpunkt einen Messimpuls (Ultraschallsignal) aus. Mehrere Sensoren sind sodann während einer durch das gemeinsame Zeitschema vorgegebenen Zeitspanne empfangsbereit, um ein reflektiertes Signal (Echo) zu empfangen. Nach dem Ende der Zeitspanne werden die Messergebnisse von jedem beteiligten Sensor zur Steuerkomponente 210 drahtlos übertragen. Die Übertragung der Messergebnisse erfolgt nacheinander in jeweils einzeln zugeordneten Zeitrahmen. Ein Messergebnis kann bspw. eine Repräsentation eines anhand der jeweiligen lokalen Zeitbasis gemessenen Echos, eine gemessene Laufzeit oder bereits eine berechnete Distanz betreffen.

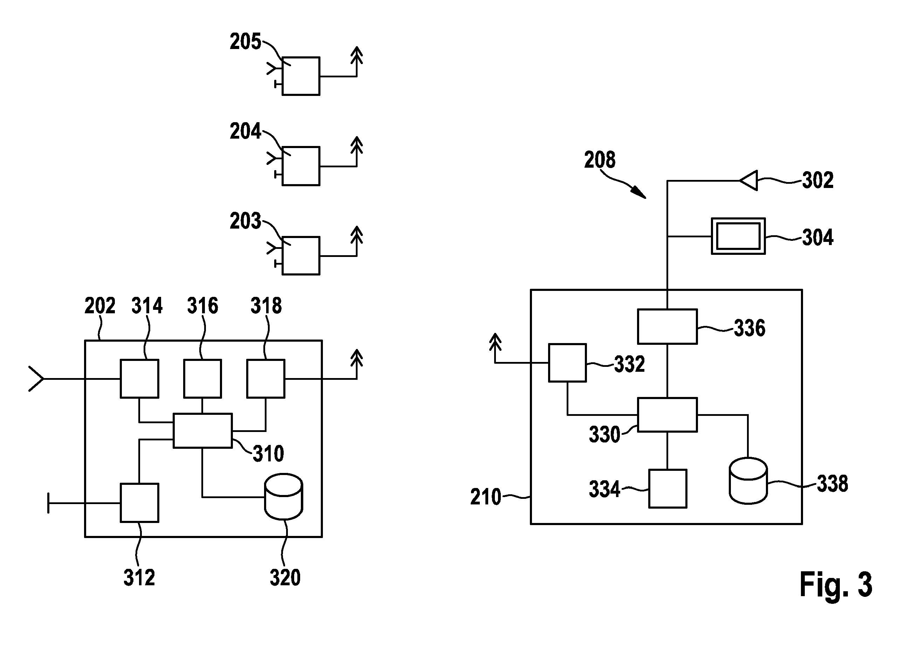

Figur 3 ist eine schematische Darstellung der rückwärtigen Sensoren 202 - 205 sowie der Steuerkomponente 210 aus Fig. 2, wobei funktionale Einheiten des Sensors 202 sowie der Steuerkomponente 210 skizziert sind. Die Sensoren können über ebensolche Einheiten verfügen wie sie für den Sensor 202 gezeigt sind. Eine akustische Ausgabeeinheit, nämlich ein Lautsprecher 302, und eine optische Ausgabeeinheit, nämlich ein Anzeigeelement 304, des HMI 208 sind ebenfalls angedeutet.

Der Ultraschallsensor 202 verfügt über ein Steuerungsmodul (Controller) 310, einen Ultraschallsender 312, einen Ultraschallempfänger 314, einen Taktgeber 316 sowie ein Kommunikationsmodul 318 für die drahtlose Kommunikation mit der Steuerkomponente 210. Ultraschallsender 312 und -empfänger 314 können auch integriert vorliegen, beispielsweise in Form eines piezoelektrischen Wandlers oder eines anderen elektro-akustischen Wandlers. Der Taktgeber 316 kann ein Quarzkristall sein oder ein anderer Taktgenerator, wie er aus dem Bereich der Prozessortechnik bekannt ist. Das Kommunikationsmodul 318 kann auf einer Technologie zur drahtlosen Kommunikation basieren wie etwa WLAN, DECT, HiperLAN, Bluetooth, oder ZigBee.

Die Steuerkomponente 210 verfügt über ein Steuermodul (Controller) 330, ein Kommunikationsmodul 332, einen Taktgeber 334, sowie ein Ausgabemodul 336. Das Kommunikationsmodul 332 ist zur Kommunikation mit dem Kommunikationsmodul 318 des Sensors 202 sowie der entsprechenden Kommunikationsmodule (nicht gezeigt) der weiteren Sensoren 203 - 205 ausgebildet.

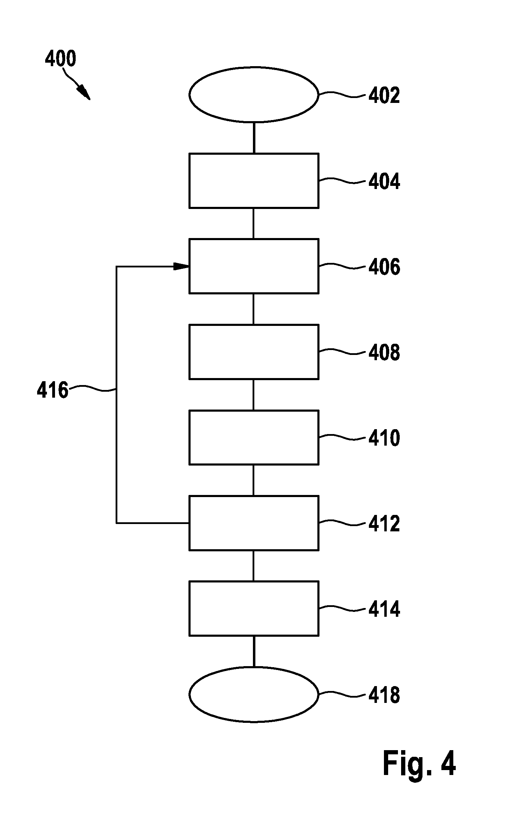

Eine Funktionsweise der in Figur 3 skizzierten Anordnung wird nachfolgend anhand des Flussdiagramms in Figur 4 eingehender beschrieben. Das Verfahren 400 dient (402) der Durchführung einer ultraschallbasierten Messung zur Richtungsbestimmung zum Objekt 212.

In Schritt 404 werden die Sensoren 202 - 205 mit der Steuerkomponente 210 synchronisiert. Genauer gesagt werden die Sensoren 202 - 205 und die Steuerkomponente 210 auf eine gemeinsame Zeitbasis synchronisiert, damit sie kollisionsfrei kommunizieren können. Derartige Verfahren für drahtlose Systeme werden meist im sog. "Media Access Layer" durchgeführt und sind als solche bekannt. Üblicherweise werden hierzu von einem gemeinsamen Master Synchronisationsnachrichten ausgesendet, etwa sogenannte SYNC-Beacons. Die anderen Kommunikationsteilnehmer passen ihre interne Taktung basierend auf diesen Nachrichten an. Bei FlexRay-Bussystemen wird zudem eine Multi-Master-Lösung verwirklicht. Hier übersenden mindestens zwei Knoten des Kommunikationsnetzwerkes SYNC-Frames als Synchronisationsnachrichten. Jeder Knoten im Netzwerk misst die Zeit zwischen zwei SYNC-Frames und justiert dementsprechend die eigene interne Uhr (Clock) nach Geschwindigkeit (Rate) und absoluter Zeit (Offset).

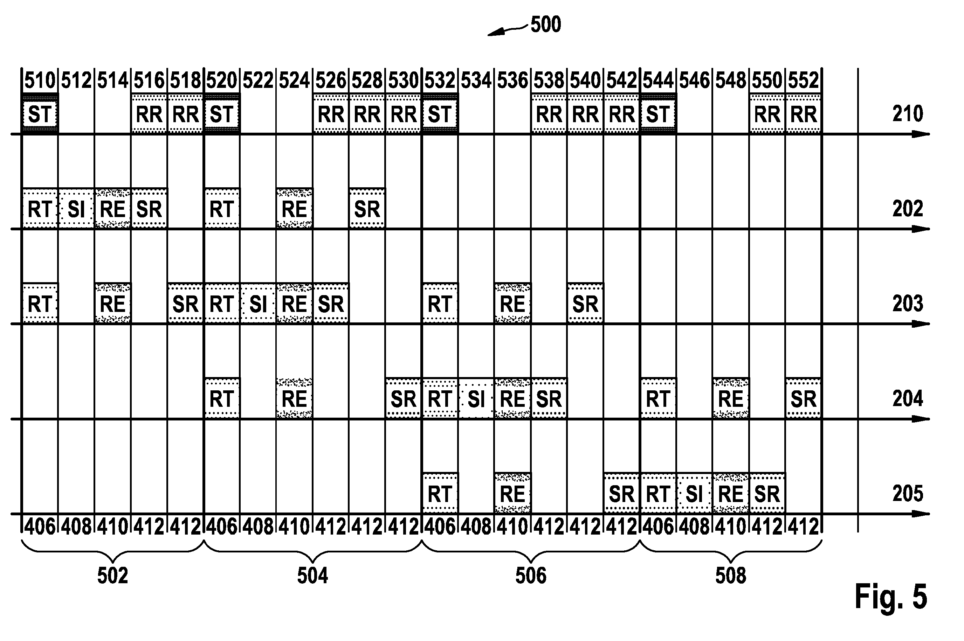

Das Messverfahren 400 läuft gemäß einem in Figur 5 veranschaulichten Zeitschema 500 ab, welches die Steuerkomponente 210 sowie die Sensoren 202 - 205 betrifft. Ein Messablauf umfasst einen oder mehrere Zeitrahmenblöcke 502 - 508, wobei jeder Rahmenblock jeweils wieder mehrere Zeitrahmen umfasst. So umfasst der Rahmenblock 502 die Zeitrahmen 510 - 518, der Rahmenblock 504 die Zeitrahmen 520 - 530, usf. In dem einfachen Zeitschema 500 können die Rahmenblöcke unterschiedlich lang sein, d.h. unterschiedliche viele Zeitrahmen umfassen, jedoch haben die Zeitrahmen alle dieselbe zeitliche Länge. Bei anderen Ausführungsbeispielen können die Zeitrahmen unterschiedliche Zeitlängen haben.

Nachfolgend wird der Ablauf einer Messung im Rahmenblock 502 geschildert. Im Schritt 406 (Fig. 4) bzw. ersten Zeitrahmen 510 wird die Messung initialisiert bzw. getriggert. Hierzu sendet die Steuerkomponente 210 an die Sensoren 202 und 203 über das Kommunikationsmodul 332 eine entsprechende Aufforderungsnachricht (ST, "Start Measurement"). Diese Initialisierungsnachricht ST wird in der Steuerkomponente 210 vom Steuermodul 330 erstellt, beispielsweise basierend auf in einem Speicher 338 gespeicherten Informationen zum gemeinsamen Zeitschema 500.

Jeder erste Zeitrahmen eines Rahmenblocks dient der Übermittlung von Steuernachrichten an die Sensoren, daher sind alle Sensoren im Zeitrahmen 510 auf Empfang. Die Nachricht ST ist mittels einer geeigneten Adressangabe an die Sensoren 202 und 203 gerichtet, welche die Nachricht ST empfangen (RT, "Receive Trigger"); die Sensoren 204, 205 und 206 empfangen die Nachricht ST ebenfalls, aber verarbeiten diese nicht weiter. Im Sensor 202 wird die Nachricht ST vom Kommunikationsmodul 318 empfangen, als an den Sensor 202 gerichtet erkannt und daraufhin an das Steuermodul 310 weitergeleitet, wo die Vorgaben der Nachricht ST bspw. in ein internes Scheduling übernommen werden, welches die durchzuführenden Schritte in den nachfolgenden Zeitrahmen des Rahmenblocks 502 betreffen.

Die Nachricht ST kann beispielsweise eine Vorgabe enthalten, welcher der Sensoren einen Messimpuls aussenden soll, in welchem Zeitrahmen welche Sensoren zur Detektion des Echos empfangsbereit sein sollen, etc. Bei Ausführungsbeispielen mit variablen Zeitrahmen kann auch bspw. eine Länge der nachfolgenden Zeitrahmen angegeben werden.

Die Initialisierungsnachricht ST kann auch zusätzlich oder alternativ zu einer im MAC-Layer durchgeführten Synchronisation des internen Taktgebers 316 des Sensors 202 mit dem Taktgeber 334 der Steuerkomponente 210 verwendet werden. Wesentlich ist, dass für die im Rahmenblock 502 durchgeführte Messung die Ultraschallsensoren 202 und 203 auf einer gemeinsamen Zeitbasis operieren, so dass eine Laufzeitmessung für das durch den Sensor 202 ausgesendete Messsignal und die durch den Sensor 203 empfangene Reflektion möglich ist.

Im Zeitrahmen 512 (Schritt 408) sendet der Sensor 202 in Reaktion auf eine entsprechende Anweisung in der Nachricht ST einen Ultraschall-Messimpuls aus (SI, "Sent out Impulse"). Gemäß den Anweisungen der Nachricht ST empfangen die Ultraschallsensoren 202 und 203 im Zeitrahmen 514 (Schritt 410) Reflexionen des vorher ausgesendeten Messimpulses (RE, "Receive Echo").

Die weiteren Sensoren 204, 205 und 206 nehmen an der hier beschriebenen Messung nicht teil, was nicht ausschließt, dass sie durch die Steuerkomponente 210 zu anderen Aktionen veranlasst werden, beispielsweise Distanzmessungen oder einen anderen Richtungsmessung. Diese weiteren Aktionen können sich an das in Figur 5 skizzierte Zeitschema 500 halten oder können auf einem oder mehreren anderen Zeitschemata basieren; ein solches Zeitschema kann bspw. auch nur für einen einzelnen Sensor gültig sein. Die Anweisungen für solche anderen Aktionen kann im Zeitrahmen 510 ebenfalls mit der Nachricht ST oder mit anderen Steuernachrichten an die weiteren Sensoren übermittelt werden (im ersteren Fall wäre dann die Nachricht ST, anders als oben diskutiert, neben den Sensoren 202 und 203 auch an weitere Sensoren gerichtet).

In Schritt 412, der sich über die Zeitrahmen 516 und 518 erstreckt, werden die Messergebnisse der Sensoren 202 und 203 an die Steuerkomponente 210 übermittelt. Beispielhaft wird das Verfahren für den Sensor 202 geschildert, der Ablauf kann im Sensor 203 ähnlich sein: Im Zeitrahmen 516 wertet das Steuermodul 310 das im Zeitrahmen 514 vom Empfänger 314 empfangene Signal (RE, "Receive Echo") auf das Vorhandensein eines Echos aus und ermittelt daraus ein Ergebnis, welches beispielsweise im Speicher 320 zwischengespeichert werden kann. Die Laufzeit des Signals entspricht hier einer basierend auf dem internen Taktgeber 316 gemessenen Zeit, die zwischen dem Aussenden des Messimpulses durch den Sender 312 und dem Empfang eines Echos durch den Empfänger 314 vergangen ist. Aus dieser Laufzeit lässt sich eine Distanz zum reflektierenden Objekt 212 berechnen. Das Steuermodul 310 kann die gemessene Laufzeit und/oder die berechnete Distanz zwischenspeichern. Dieses Messergebnis wird sodann im Zeitrahmen 516 aus dem Zwischenspeicher 320 ausgelesen und über das Kommunikationsmodul 318 drahtlos an die Steuerkomponente 210 übermittelt.

Wie dies in der Initialisierungsnachricht ST festgelegt wurde, sendet im Zeitrahmen 516 zunächst der Sensor 202 seine Ergebnisse (SR, "Send Result"; RR, "Receive Result"), dann im Zeitrahmen 518 der Sensor 203. Die Steuerkomponente 210 empfängt mit dem Kommunikationsmodul 332 die Nachrichten SR und speichert diese beispielsweise in einem Zwischenspeicher 338. Die Messergebnisse können in Zuordnung zum jeweiligen Einbauort der Sensoren 202 und 203 gespeichert werden, was für nachfolgende Triangulationsberechnung (Schritt 414) zur Richtungsbestimmung zum detektierten Objekt 121 von Bedeutung ist.

Mit den Zeitrahmen 516 und 518, d.h. der Kommunikation der Messergebnisse, endet der Rahmenblock 502. Im Beispiel der Fig. 5 werden weitere Messungen in den Rahmenblöcken 504, 506 und 508 durchgeführt. In jedem Rahmenblock werden die Schritte 406 - 412 mit jeweils anderen Sensoren entlang der rückwärtigen Front des Fahrzeugs 200 sinngemäß wiederholt, wie durch den Pfeil 416 in Fig. 4 angedeutet.

Die sinngemäß wiederholte Durchführung der Schritte 406 - 412 ist in Figur 5 durch die entsprechenden Bezugsziffern angedeutet. Jeder der Rahmenblöcke 502, 504, 506, 508 umfasst einen Zeitrahmen 510, 520, 532, 544 zur Übertragung der Initialisierungsnachricht. Bei anderen Ausführungsbeispielen können auch mehrere Rahmenblöcke gemeinsam nur einen Zeitrahmen zur Initialisierung aufweisen, in dem Steuerinformationen für mehrere Rahmenblöcke übertragen werden.

Jeder der Rahmenblöcke 502, 504, 506, 508 umfasst einen weiteren Zeitrahmen 512, 522, 534, 546 zum Aussenden des Messsignals, sowie einen nachfolgenden Zeitrahmen zur Detektion gegebenenfalls vorhandener Reflektionen (RE). Dieser Zeitrahmen RE wird so lang bemessen, dass alle Detektoren innerhalb dieses Zeitrahmens Reflexionen empfangen können. Die Länge dieses Zeitrahmen bestimmt somit die maximal mögliche Laufzeit und somit die effektive Reichweite des Systems. Der Zeitrahmen RE kann, anders als in Fig. 5 gezeigt, länger oder kürzer als die anderen Zeitrahmen sein. Der Zeitrahmen RE kann auch in aufeinanderfolgenden Rahmenblöcken verschieden lang sein. Der Zeitrahmen RE kann bspw. auf ein bereits vorher detektiertes Objekt abgestimmt sein.

Jeder Rahmenblock 502, 504, 506, 508 umfasst so viele Zeitrahmen SR wie zur Übertragung der Messergebnisse notwendig, die Rahmenblöcke 502 und 508 umfassen also zwei Zeitrahmen RR 516 und 518 bzw. 550 und 552, die Rahmenblöcke 504 und 506 umfassen jeweils drei Zeitrahmen RR 526, 528, 530 bzw. 538, 540, 542. Die in den Zeitrahmen SR übertragenen Messergebnisse können beispielsweise nur einen Zeitstempel umfassen, wenn die Taktgeber der Sensoren beispielsweise auf einen gemeinsamen Offset aufsynchronisiert wurden. Aus dem Zeitstempel des sendenden Sensors und den Zeitstempeln der empfangenden Sensoren kann dann für jeden Sensorort die Laufzeit und damit die Distanz zum Objekt 212 bestimmt werden. Alternativ oder zusätzlich können die Messergebnisse auch Angaben zur Laufzeit oder bereits berechneten Distanz enthalten.

Die übermittelten Messergebnisse können auch die Adresse des jeweiligen Sensors tragen; dies ist aber nicht zwingend erforderlich, wenn basierend auf dem gemeinsamen Zeitschema, welches in den Initialisierungsnachrichten ST bekannt gemacht wurde, in jedem Zeitrahmen SR bekannt ist, welcher Sensor zu senden hat.

Bei einer weiteren Abwandlung ist es denkbar, dass Messungen in mehreren Rahmenblöcken hintereinander durchgeführt werden, aber die Messergebnisse erst in einem abschließenden Rahmenblock an die zentrale Steuerkomponente übertragen werden. Somit würden in den vorausgehenden Rahmenblöcken die Zeitrahmen SR / RR entfallen. Im abschließenden Rahmenblock würde für jeden Sensor ein Zeitrahmen SR vorgesehen, und ein Sensor würde u.U. mehrere Messergebnisse in dem ihm zugeordneten Zeitrahmen SR übertragen.

In Schritt 414 berechnet die Steuerkomponente 210 die Richtung zum detektierten Objekt 212 durch eine Triangulationsberechnung. Eine derartige Berechnung kann nach jedem der Rahmenblöcke 502, 504, 506, 508 durchgeführt werden und/oder kann nach dem vollständigen Durchlaufen der durch diese Rahmenblöcke beschriebenen Messreihe durchgeführt werden. Hierzu entnimmt das Steuermodul 330 dem Zwischenspeicher 338 die Messergebnisse in Zuordnung zum jeweiligen Sensor bzw. dessen Einbauort. Die Distanzen werden aus den übermittelten Laufzeiten berechnet, sofern nicht bereits Distanzwerte übermittelt wurden (ggf. werden die übermittelten Distanzwerte noch korrigiert, bspw. basierend auf der Zeitbasis 334, wenn diese präziser ist als die lokalen Zeitbasen der Sensoren). Aus den Distanzen und den bekannten Einbauorten wird dann mittels Triangulation die Richtung zum Objekt 212 berechnet.

Das Messergebnis wird sodann akustisch über den Lautsprecher 302 und ggf. auch optisch über die Anzeige 304 ausgegeben. Damit endet das Verfahren (Schritt 418), jedoch kann das Verfahren 400 anhand des Zeitschemas 500 fortlaufend wiederholt werden, um den rückwärtigen Bereich des Fahrzeugs 200 kontinuierlich auf Hindernisse zu überwachen, beispielsweise in einer Einparksituation.

Das Zeitschema 500 kann durch die Steuerkomponente 210 vorgegeben werden, indem in der Nachrichten ST entsprechende Informationen an die betreffenden Sensoren übermittelt werden. Ohne eine Übermittlung derartiger Informationen könnte beispielsweise ein vorgegebenes Default-Schema durchlaufen werden. Alternativ kann ein Zeitschema auch für das Einparksystem 201 fest vorgegeben sein, indem das Schema in den Steuermodulen in der Steuerkomponente, aber auch den Sensoren fest vorgegeben ist, bspw. durch Programmierung ab Werk. Wird das Zeitschema jedoch durch die Steuerkomponente des Einparksystems gesteuert, könnte dies eine situative Veränderung etwa der Länge der Zeitrahmen oder der Zahl der empfangenden Sensoren beinhalten. So könnten beispielsweise zur Erhöhung der Genauigkeit mehr Sensoren zugeschaltet werden (allerdings würden sich wegen der zusätzlichem Zeitrahmen SR/RR die Rahmenblöcke entsprechend verlängern, d.h. die Wiederholfrequenz würde verringert). Eine derartige Einstellung des Zeitschemas kann beispielsweise in Abhängigkeit von einem oder mehreren detektierten Objekten, sonstigen Eigenschaften der Fahrzeugumgebung, einer Geschwindigkeit des Fahrzeugs, etc. vorgenommen werden.

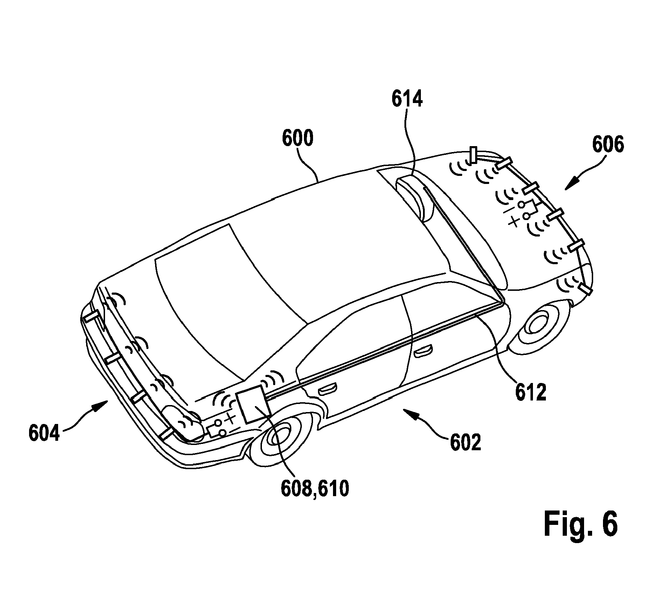

Figur 6 zeigt ein weiteres Ausführungsbeispiel eines erfindungsgemäßen Parkhilfesystems 602 in einem Fahrzeug 600. Wie in dem in Figur 2 dargestellten Beispiel sind auch hier eine Mehrzahl Sensoren 604 in einem Heckbereich des Fahrzeugs 600 sowie eine Mehrzahl an Sensoren 606 in einem Frontbereich des Fahrzeugs 600 drahtlos mit einer Steuerkomponente 610 verbunden. Allerdings ist bei dem System 602 die Steuerkomponente 610 in einer zentralen Steuerung 608 implementiert. Die Steuerung 608 kann beispielsweise eine ECU umfassen, welche eine Vielzahl weiterer Assistenzfunktionen im Fahrzeug 600 steuert. Die Steuerkomponente 610 ist über einen allgemeinen CAN-Bus 612 des Fahrzeugs 600 mit einem HMI 614 verbunden. Der CAN-Bus 612 ist zwischen ECU 608 und HMI 614 für andere Assistenzfunktionen ohnehin erforderlich, so dass für das erfindungsgemäße Parkhilfesystem keine zusätzlichen Aufwände in Form einer Verkabelung oder weiterer Hardwareeinheiten erforderlich sind.

In jedem Falle entfällt auch bei dem in Figur 6 gezeigten Ausführungsbeispiel 600 die herkömmlich erforderliche Verkabelung zwischen den Sensoren 604, 606 und der Steuerkomponente 610. Die Durchführung von Distanzmessungen und Richtungsbestimmungen von Objekten bzw. Hindernissen in einer Umgebung des Fahrzeugs 600 kann durch das Einparksystem 600 in gleicher Weise vorgenommen werden wie dies oben für das System 200 der Figuren 2 - 5 diskutiert wurde.

Bei einem nochmals weiteren Ausführungsbeispiel (ohne Figur) ist die Steuerkomponente zur Koordinierung der Sensor-Subsysteme in einem der Ultraschallsensoren integriert. Alternativ oder ergänzend kann die Funktionalität der Steuerkomponente auch verteilt implementiert werden. So kann eine Gruppe von Sensoren, die beispielsweise die Sensoren in einem Heckbereich eines Fahrzeug umfasst, ihre Messergebnisse in Form von Zeitstempeln an einen der Sensoren aus der Gruppe übermitteln, der hieraus Laufzeiten und/oder Distanzen berechnet. Diese Ergebnisse (Paarungen von Distanzwerten und Identifizierungen des zugehörigen Sensors) würden dann vom Sensor drahtlos oder drahtgebunden an eine Berechnungseinheit in einem HMI oder einer ECU übermittelt, wo sodann Triangulationsberechnungen zur Richtungsbestimmung durchgeführt würden. Viele weitere Abwandlungen sind fachmännisch und denkbar.

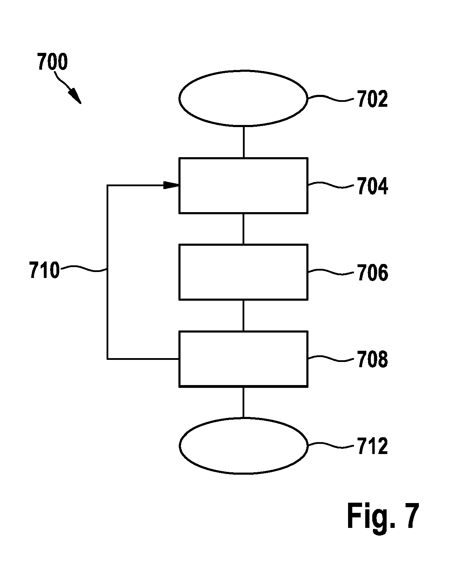

Figur 7 ist ein Flussdiagramm zur Veranschaulichung eines Verfahrens 700 zur Initialisierung des in Figur 2 gezeigten Parkhilfesystems 200. Das Verfahren 700 betrifft insbesondere eine zur drahtlosen Ansteuerung der Sensoren 202 - 205, 206 erforderliche Adressvergabe. Zwar ist eine individuelle Adressvergabe etwa bereits bei der Herstellung der Sensoren möglich. Allerdings wäre dann eine aufwändige Lagerhaltung mit Führung entsprechender Stücklisten erforderlich. Ggf. wäre auch bei der Fahrzeugherstellung darauf zu achten, dass stets die richtigen Sensoren an den richtigen Einbauorten verbaut werden. Zur Vermeidung derartiger, kostenträchtiger Aufwände ist es vorteilhaft, wenn die Sensoren als Gleichteile ausgeführt sind, d.h. als identische Teile, die bei ihrer Herstellung und bis zum Einbau entweder keine Adresse oder alle dieselbe Adresse besitzen.

Das Verfahren 700 geht von als Gleichteilen verbauten Sensoren aus und beschreibt, wie eine initiale Adressvergabe an die bereits im Fahrzeug eingebauten und an die Bordversorgung angeschlossenen Sensoren erfolgt (702). Jeder der Sensoren 202 - 205, 206 ist so konfiguriert, dass er sich passiv verhält, sofern bzw. solange ein Hindernis im Strahlengang vorhanden ist, welches sich in einem Abstand befindet, der kleiner ist als ein vorgegebener Mindestabstand. Der Mindestabstand ist so gewählt, dass der Sensor passiv bleibt, solange sich ein Hindernis unmittelbar am Sensor befindet, beispielsweise in Form eines Einbauschutzes über der Stosstange, in die der Sensor eingebaut ist, einer Schutzhülle oder dergleichen. Das passive Verhalten umfasst insbesondere, dass noch keine Nachrichten über das drahtlose Kommunikationsmodul 318 gesendet werden.

In Schritt 704 wird durch den Sensor 202 (Fign. 2, 3) eine Entfernung eines Hindernisses im Strahlengang des Senders 312 durch den Empfänger 314 detektiert. In Schritt 706 wird in Reaktion auf die in Schritt 704 detektierte Hindernisentfernung vom Sensor 202 über das Kommunikationsmodul 318 eine drahtlose Nachricht an eine Steuerkomponente, d.h. an die Steuerkomponente 210 geschickt. Die Nachricht enthält eine Adressanforderung. Solche Nachrichten zur Adressanfrage sind aus drahtlosen, aber auch drahtgebundenen Netzwerken bekannt.

Die Steuerkomponente 210 erhält die Anfragenachricht und sendet in Schritt 708 in Reaktion auf diese Anforderung eine Adressvergabenachricht aus, welche die an den Sensor 202 zugewiesene Adresse angibt. Die Nachricht wird nur durch den Sensor 202 empfangen, da die weiteren Sensoren aufgrund des noch in ihrem Strahlengang befindlichen Hindernisses passiv verhalten. Der Sensor 202 speichert die Adresse, um zukünftig für den Sensor 202 bestimmte Nachrichten erkennen zu können und um diese ausgesendeten Nachrichten als Absenderadresse hinzuzufügen.

Wie durch den Pfeil 710 in Figur 7 symbolisiert, kann sich dieses Verfahren für weitere oder alle Sensoren, die im Fahrzeug 201 in Figur 2 verbaut sind, wiederholen. Das Verfahren zur Adressvergabe endet im Schritt 712. Es kann bspw. für die frontseitigen Sensoren erneut durchlaufen werden. Damit das Verfahren 700 zu einer konsistenten, d.h. eindeutigen Adressvergabe an alle Sensoren führt, ist es erforderlich, dass jeweils nur ein Sensor gleichzeitig durch das Entfernen eines Hindernisses getriggert wird, eine Adressanfrage auszusenden und die in Reaktion hierauf erhaltene Adresse zu speichern. Dies kann z.B. dadurch erreicht werden, dass das Hindernis ein zusammenhängendes Objekt wie bspw. eine Stossstangen-Schutzfolie ist, die nach und nach abgezogen wird und dabei nach und nach den Strahlengang der in der Stossstange verbauten Sensoren freigibt.

Vorteilhaft, aber nicht zwingend, ist auch die Reihenfolge, in der die Sensoren freigelegt werden und deshalb eine Adressanfrage schicken, immer dieselbe (alternativ wäre auch ein Prozess denkbar, bei dem die Sensoren vor einem definierten Hindernis eine Reihe von Kreuzechos messen, und die Steuerkomponente daraus im Nachhinein die Einbauorte der Sensoren ermittelt). In diesem Fall können die Adressen in der Steuerkomponente einem Einbauort fest zugeordnet sein, und die Steuerkomponente vergibt die Adressen der Reihe nach. Die Adressvergabe an die Sensoren wird hierbei also in eine vorgegebene Reihenfolge bei der Entfernung eines Hindernisses oder mehrerer Hindernisse im Strahlengang der eingebauten Sensoren übersetzt. Eine solche vordefinierte Reihenfolge bei der Entfernung von Hindernissen ist beim üblicherweise hochgradig standardisierten Fertigungsprozess von Fahrzeugen (Massenfertigung) ohnehin die Regel.

Bei einer praktischen Realisierung werden die Sensoren zunächst in die Stoßstange eingebaut und an die Stromversorgung im Fahrzeug angeschlossen. Zum Schutz der Stoßstange ist auf dieser während des Montagevorgangs eine Folie, ein Klebstreifen oder dergleichen aufgebracht. Die Folie dient gleichzeitig als Hindernis im Strahlengang der Sensoren, so dass diese sich passiv verhalten, so lange sich das Hindernis im Strahlengang befindet. Nunmehr wird der Klebestreifen ausgehend von einem vordefinierten Punkt von einer Seite der Stoßstange zur anderen abgezogen. Dadurch wird das Hindernis im Strahlengang der Sensoren für einen Sensor nach dem anderen entfernt. Das Abziehen der Folie erfolgt langsam im Vergleich zu dem oben beschriebenen Adressvergabeverfahren. Eine Drahtloskommunikation zwischen Sensor und Steuerkomponente findet innerhalb weniger oder maximal einiger Dutzend Millisekunden statt. Das Abziehen einer Folie dürfte jedoch eine Zeit im Bereich einer Sekunde erfordern. Für eine definierte Adressvergabe ist es dann noch vorteilhaft, wenn die Folie bei allen Fahrzeugen (bspw. einer Baureihe) immer auf die gleiche Weise entfernt wird.

Beim Defekt eines Sensors muss dieser ausgetauscht werden. Es ist denkbar, in diesem Fall das oben beschriebene Verfahren zu wiederholen, d.h. es würde bspw. eine Folie über die Stossstange gelegt, wodurch alle Sensoren abgeschattet würden. Dieser Zustand könnte durch die zentrale Steuerkomponente detektiert werden, welche die Sensoren veranlassen könnte, in einen initialen Zustand zu wechseln. Daraufhin könnte das obige Verfahren 700 wiederholt werden; hierdurch würden alle Sensoren erneut adressiert.

Eine andere Möglichkeit besteht darin, dass die zentrale Steuerkomponente gelegentlich überprüft, beispielsweise beim Anlassen des Fahrzeugs, ob alle Sensoren vorhanden und funktionsfähig sind. Dies könnte in einem speziellen Überwachungsmodus geschehen, in dem an jeden einzelnen Sensor adressierte Nachrichten ausgesendet werden; erfolgt von einem Sensor keine Rückmeldung, ist der betreffende Sensor defekt oder wurde ausgetauscht. Reagiert nur ein einziger Sensor nicht, kann beispielsweise durch Aussenden einer Adresszuweisungsnachricht mit der fehlenden Adresse diese dem neuen, in einem Initialmodus befindlichen Sensor zugewiesen werden; die anderen Sensoren würden die Nachricht verwerfen, da sie im Besitz einer gültigen Adresse sind. Findet auf das Aussenden einer Adresszuweisungsnachricht keine Reaktion statt, oder erfolgen Reaktionen von mehreren Sensoren, weil mehrere Sensoren ausgetauscht wurden, kann beispielsweise eine Fehlermeldung ausgegeben werden, oder beim Austausch einer Mehrzahl von Sensoren kann das oben beschriebene Initialisierungsverfahren durchgeführt werden.

Bei der Verwendung von Parkassistenzsystemen basierend auf drahtloser Kommunikation besteht das Problem der Fremdechos, d.h. die Sensoren empfangen u. U. auch Ultraschallsignale benachbarter (fremder) Fahrzeuge. Das Parkhilfesystem kann dabei nicht unterscheiden, ob es sich bei dem empfangenen Signal um das reflektierte Ultraschallsignal des eigenen Fahrzeugs oder um ein Ultraschallsignal (oder eine Reflektion davon) eines fremden Fahrzeugs handelt. Eine Lösung dieses Problems wäre die Festlegung der Sendezeitpunkte des Ultraschallsignals per Zufall oder nach einem fest definierten, individuellen Muster. Distanzen und Richtungen zum Objekt könnte auf Basis einer möglichst großen Zahl von Messungen bestimmt werden, um den Einfluss von Fremdechos zu minimieren. Alternativ oder zusätzlich ist es möglich, dass sich benachbarte Parkhilfesysteme gegenseitig über die Zeiträume bzw. Zeitrahmen informieren, zu denen sie Messungen durchführen. In diesem Falle können Parkassistenten anderer Fahrzeuge einen anderen Zeitpunkt für die Aussendung der Ultraschallsignale wählen und/oder eine andere Periodendauer/Rahmenlänge für die Messungen vorsehen.

Die hier beschriebenen Verfahrensabläufe können allgemein in Form von Hardwareschaltungen, Software, bspw. in Zusammenhang mit einem programmierbaren Mikroprozessor, einer anwendungsspezifischen, integrierten Schaltung (ASIC) und/oder unter Verwendung von einem oder mehreren digitalen Signalprozessoren (DSP) implementiert werden. Eine Softwarekodierung der hier beschriebenen Verfahren kann beispielsweise in einem Random-Access-Memory (RAM) oder einem Read-Only-Memory (ROM) abgelegt sein, beispielsweise einem "Erasable Programable ROM" (EPROM) oder einem vergleichbaren semipermanenten oder permanenten Speichermedium.

Die Erfindung ist nicht auf die hier beschriebenen Ausführungsbeispiele und die darin hervorgehobenen Aspekte beschränkt; vielmehr sind innerhalb des durch die anhängenden Ansprüche angegebenen Bereichs eine Vielzahl von Abwandlungen möglich, die im Rahmen fachmännischen Handelns liegen.

## Patentansprüche

1. Ultraschallbasiertes Messverfahren in einem Parkhilfesystem (201, 602) eines Fahrzeugs (200, 600) zur Richtungsbestimmung eines Objekts (212) in einer Fahrzeugumgebung,
mit den folgenden Schritten:
- Aussenden (408) eines Messsignals;
- Empfangen (410) mehrerer Reflektionen des Messsignals durch eine Mehrzahl von Ultraschallsensoren (202, 203); und
- Bestimmen (414) der Richtung zum Objekt (212) durch eine Triangulationsberechnung basierend auf den empfangenen Reflektionen;
wobei jeder der Ultraschallsensoren (202, 203) basierend auf einem individuellen Taktgeber (316) arbeitet, und die Messung gemäß einem für die Mehrzahl der Ultraschallsensoren gemeinsamen, vorgegebenen Zeitschema (500) durchgeführt wird.

2. Verfahren nach Anspruch 1,
wobei eine Kommunikation zwischen einer die Triangulationsberechnung vornehmenden Steuerkomponente (210) und den Ultraschallsensoren (202 - 205) gemäß dem Zeitschema (500) abläuft.

3. Verfahren nach Anspruch 1 oder 2,
wobei das gemeinsame Zeitschema (500) einen gemeinsamen Zeitrahmen (514, 524, 536, 548) für die Messung der Reflektionen vorgibt.

4. Verfahren nach Anspruch 3,
wobei der Zeitrahmen (514) für die Messung der Reflektionen so lang bemessen wird, dass jeder der an der Messung beteiligten Sensoren (202, 203) Reflektionen empfangen kann.

5. Verfahren nach einem der vorhergehenden Ansprüche,
wobei das Zeitschema (500) einen eigenen Zeitrahmen (516, 518) für jeden an der Messung beteiligten Sensor (202, 203) zur Übermittlung eines Messergebnisses betreffend die empfangene Reflektion an die Steuerkomponente (210) vorsieht.

6. Verfahren nach einem der vorhergehenden Ansprüche,
wobei das Zeitschema (500) einen bestimmten Zeitrahmen (512, 522, 534, 546) zur Aussendung des Messsignals vorsieht.

7. Verfahren nach einem der vorhergehenden Ansprüche,
wobei eine Zeitlage des Zeitschemas durch ein Synchronisationsverfahren zur Synchronisation der individuellen Taktgeber (316) der Sensoren (202 - 205) untereinander und/oder durch eine Vorgabe der Steuerkomponente (210) festgelegt wird.

8. Computerprogramm zur Durchführung des Verfahrens nach einem der vorhergehenden Ansprüche, wenn das Computerprogramm auf einer programmierbaren Computereinrichtung ausgeführt wird.

9. Parkhilfesystem (201, 602) in einem Fahrzeug (200, 600) zur Durchführung eines ultraschallbasierten Messverfahrens zur Richtungsbestimmung eines Objekts (212) in einer Fahrzeugumgebung,
mit den folgenden Komponenten:
- einer Komponente (312) zum Aussenden eines Messsignals;
- einer Mehrzahl von Ultraschallsensoren (202, 203) zum Empfangen mehrerer Reflektionen des Messsignals; und
- eine Steuerkomponente (210) zum Bestimmen der Richtung zum Objekt (212) durch eine Triangulationsberechnung basierend auf den empfangenen Reflektionen;
wobei jeder der Ultraschallsensoren (202, 203) ausgebildet ist, um basierend auf einem individuellen Taktgeber (316) zu arbeiten, und wobei das Parkhilfesystem (201, 602) ausgebildet ist, die Messung gemäß einem für die Mehrzahl der Ultraschallsensoren (202, 203) gemeinsamen, vorgegebenen Zeitschema (500) durchzuführen.

10. Parkhilfesystem nach Anspruch 9, wobei die Ultraschallsensoren (202 - 205, 206, 604, 606) drahtlos an die Steuerkomponente (210, 610) angebunden sind.

11. Parkhilfesystem nach Anspruch 9 oder 10, wobei die Steuerkomponente (210, 610) in eine Mensch-Maschine-Schnittstelle (208) des Parkassistenten (201), eine zentrale Steuereinheit (608) des Parkassistenten (602), und/oder einen der Ultraschallsensoren integriert ist.

12. Verfahren zur Initialisierung eines Parkhilfesystems in einem Fahrzeug mit einer Mehrzahl von Sensoren zur Objektdetektion in einer Fahrzeugumgebung, mit den Schritten
- Detektieren (704), durch einen der Sensoren, dass ein Hindernis in einem Strahlengang des Sensors entfernt wird;
- Aussenden (706), basierend auf der Detektion, einer Anforderung durch den Sensor an eine Steuerungseinheit des Parkhilfesystems; und
- Aussenden (708), in Reaktion auf die Anforderung, einer für den Sensor bestimmten Adressvergabe von der Steuerungseinheit;
wobei die Steuerungseinheit ausgebildet ist, eine Adressvergabe für jeden der Sensoren in einer vordefinierten Reihenfolge entsprechend einer vorgegebenen Reihenfolge bei der Entfernung von Hindernissen vor den Sensoren auszusenden.

13. Parkhilfesystem in einem Fahrzeug mit einer Mehrzahl von Sensoren zur Objektdetektion in einer Fahrzeugumgebung und mit einer Steuerungseinheit,
- wobei jeder der Sensoren (202 - 205) dazu ausgebildet ist, das Entfernen eines Hindernisses in einem Strahlengang des Sensors zu detektieren;
- wobei jeder der Sensoren (202 - 205, 206) ausgebildet ist zum Aussenden, basierend auf der Detektion, einer Anforderung an eine Steuerungseinheit (210) des Parkhilfesystems; und
- wobei die Steuerungseinheit (210) ausgebildet ist zum Aussenden, in Reaktion auf die Anforderung, einer für den Sensor bestimmten Adressvergabe;
und wobei die Steuerungseinheit ausgebildet ist, eine Adressvergabe für jeden der Sensoren in einer vordefinierten Reihenfolge entsprechend einer vorgegebenen Reihenfolge bei der Entfernung von Hindernissen vor den Sensoren auszusenden.
